# EUROPEAN PATENT APPLICATION

(11) **EP 3 070 825 A1**
(43) Date of publication of application: **21.09.2016**
(21) Application number: 16159818.0
(22) Date of filing: 11.03.2016
(51) Int. Cl.: H02K 33/02

(54) **LINEAR ACTUATOR**

(30) Priority: 13.03.2015 KR 20150035221
(71) Applicant: Unick Corporation, Busan 602-819 (KR)
(72) Inventor: LEE, Chang-Hoon, 50800 Gyeongsangnam-do (KR); ROH, Eui-Dong, 46997 Busan (KR); KIM, Dong-Woo, 50949 Gyeongsangnam-do (KR); CHOI, Bong-Ki, 50826 Gyeongsangnam-do (KR); LEE, Kyung-Min, 462-807 Gyeonggi-do (KR); PARK, Cheol-Soon, 49426 Busan (KR); JEONG, Dong-Jin, 47613 Busan (KR)
(74) Representative: Winter, Brandl, Fürniss, Hübner, Röss, Kaiser, Polte - Partnerschaft mbB

(57) **Abstract**

The present invention relates to a linear actuator that can allow a structure of switching 4H/4L modes of a transfer case to be simplified and also allow switching between 4H/4L modes to be made reliably. The linear actuator comprises: a spool-shaped bobbin, a coil wound around an outer peripheral surface of the bobbin, a core combined through the bobbin and having an operating space formed therein, a yoke combined to an upper portion of the bobbin and having a guide hole formed therein, a plunger installed to be movable in the operating space, a rod combined through the plunger and protruding to the outside through the guide hole, a spring installed between the core and the plunger to elastically support the plunger upwardly, a holder provided around the bobbin and having a connector provided at one side thereof, and a casing combined to enclosure the holder.

## Description

### BACKGROUND

### 1. Technical Field

The present invention relates to a linear actuator that is installed in a transfer case of four wheel drive vehicles, and more particularly relates to a linear actuator that is used to switch between 4H and 4L modes.

### 2. Description of the Related Art

Operating modes of vehicles are divided into a two-wheel drive mode and a four-wheel drive mode. The two-wheel drive mode refers to a mode for transmitting driving force generated by the engine to only any one of front and rear wheels, while the four-wheel drive mode refers to a mode for transmitting the driving force to all front and rear wheels. The four-wheel drive mode among those two modes is subdivided into a part-time four-wheel drive (4WD) mode and a full-time four-wheel drive (AWD) mode. The part-time four-wheel drive mode is a mode that can select between a two-wheel drive mode and a four-wheel drive mode as necessary, while the full-time four-wheel drive mode is a mode of driving always four wheels.

The four-wheel drive mode as mentioned above is excellent in running performance on uneven rough roads or the surface of slippery roads because driving force is transmitted to four wheels. As the full-time four-wheel drive mode, inter alia, distributes driving force in consideration of traction and the number of revolutions of each of wheels, it can optimize the traction of wheels so that the vehicle can run stably.

In general, four-wheel drive vehicles are provided with a transfer case for distributing driving force generated by the engine to front wheels and rear wheels respectively. The transfer case for the part-time four-wheel drive vehicle has a mode conversion function to convert between 2H and 4H modes and a speed change switch function to switch between 4H and 4L modes.

Korean Laid-Open Patent Publication No. 2012-0079568 (issued on July 13, 2012) discloses a transfer case for four-wheel drive vehicles.

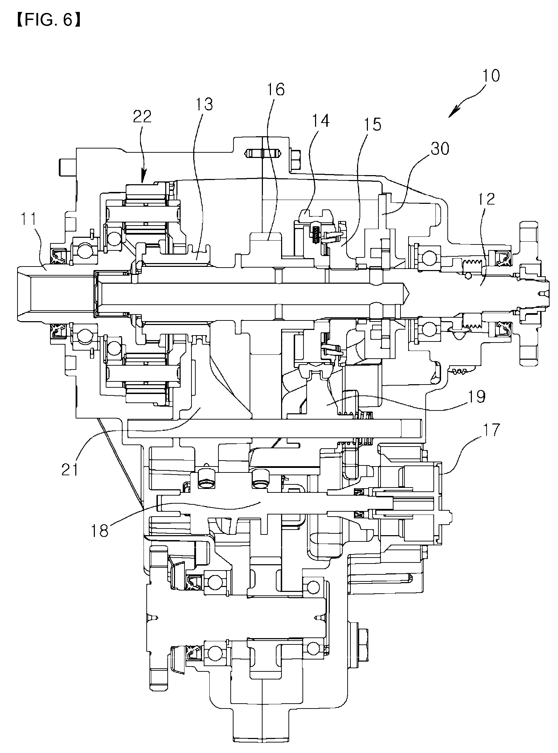

Referring to a conventional transfer case as shown in Fig. 6, an input shaft 11 that is connected to a transmission gear box is provided with an output shaft 12 for outputting power to rear wheels, while the output shaft 12 is provided with a first sleeve 13 for switching between 4H/4L modes. Further, the output shaft 12 is also provided with a second sleeve 14 and a cone 15 which are used to transmit power to front wheels when switching from 2H mode to 4H mode. The second sleeve 14 is configured such that it is mounted to be capable of running idle on the output shaft 12 and to be movable along a drive sprocket 16 to engage with the cone 15 under 4H mode.

Upon switching from 2H mode to 4H mode, a drive cam 18 is rotated by a motor 17 operating in response to the signal received from a control unit (not shown), and a shift fork 19 operated by the drive cam 18 forces the second sleeve 14 to move to and engage with the cone 15. As such, when the second sleeve 14 engages with the cone 15, rotational force of the output shaft 12 is output to front wheels through the second sleeve 14.

Meanwhile, the drive cam 18 activates a drive fork 21 for reciprocating the first sleeve 13 for switching between 4H/4L modes in a straight line. When the first sleeve 13 engages with a sun gear of a planetary gear set 22, switching to 4H mode occurs, whereas when the first sleeve engages with a carrier, switching to 4L mode occurs.

Such a structure for switching 4H/4L modes by using the first sleeve 13 and the planetary gear set 22 as mentioned above has drawbacks in that it is inconvenient to use due to its complex configuration and switching between 4H/4L modes is not made reliably. Further, when running on curved roads, switching from 4H mode to 4L mode and from 4L mode to 4H mode occurs, irrespective of the driver's intention, which renders the state of the vehicle unstable and thereby the vehicle may be possibly pushed toward the road outside or overturned.

### [Prior Art Document]

### Patent Document

Korean Laid-Open Patent Publication No. 2012-0079568 (issued on July 13, 2012)

### SUMMARY

The present invention has been made in an effort to solve the above-described problems associated with prior art.

It is an aspect of the present invention to provide a linear actuator that can allow a structure of switching 4H/4L modes of a transfer case to be simplified and also allow switching between 4H/4L modes to be made reliably.

In addition, another aspect of the present invention is to provide a linear actuator that has a simple structure and is facilitate to manufacture and superior in operability and response capability.

The present invention is not limited to the above aspect and other aspects of the present invention will be clearly understood by those skilled in the art from the following description.

In accordance with one aspect of the present invention for achieving the above object, a linear actuator comprises: a spool-shaped bobbin, a coil wound around an outer peripheral surface of the bobbin, a core combined through the bobbin and having an operating space formed therein, a yoke combined to an upper portion of the bobbin and having a guide hole formed therein, a plunger installed to be movable in the operating space, a rod combined through the plunger and protruding to the outside through the guide hole, a spring installed between the core and the plunger to elastically support the plunger upwardly, a holder provided around the bobbin and having a connector provided at one side thereof, and a casing combined to enclosure the holder.

A groove for reinforcing magnetic force is formed on an intermediate outer peripheral surface of the core.

The operating space formed in the inside of the core includes a first operating space in which the plunger is installed to be movable and a second operating space in which the rod is installed to be movable. In this case, the second operating space is provided with a dry bearing for supporting movement of the rod and decreasing friction, wherein said spring is disposed between the dry bearing and the plunger.

The rod includes a small diameter portion passing through the plunger and a large diameter portion formed in the upper portion of the small diameter portion, wherein a non-magnetic shim plate is interposed between the large diameter portion and the plunger.

A guide is protruded from a top surface of the yoke while the guide hole is formed to penetrate the guide up and down. In this case, the inner wall of the guide hole is formed with coating layer.

In addition, another embodiment of the present invention further comprises a terminal installed in the inside of the holder and protruding to the outside through the connector and connecting electrically to the coil, and a diode provided in the inside of the holder and connected electrically to the terminal.

According to the present invention that may be constituted as mentioned above, switching 4H/4L modes of a transfer case can be made by allowing or limiting rotation of a worm gear, so that a structure of switching 4H/4L modes of the transfer case can be simplified and switching between 4H/4L modes can be made reliably.

In addition, the linear actuator according to the present invention has a simple structure and is facilitate to manufacture and superior in operability and response capability, so that it is suitable to the purpose of switching modes of the transfer case.

### BRIEF DESCRIPTION OF DRAWINGS

Fig. 1 is a perspective view of a linear actuator according to an embodiment of the present invention;
Fig. 2 is a section view of a linear actuator according to an embodiment of the present invention;
Fig. 3 is a perspective view of a linear actuator according to an embodiment of the present invention, showing the state that the linear actuator is installed in a transfer case;
Figs. 4 and 5 are diagrams showing operating state of the linear actuator according to an embodiment of the present invention respectively; and
Fig. 6 is a section view of a conventional transfer case.

### DETAILED DESCRIPTION

Hereinafter, embodiments of the present invention will be described in detail with reference to the accompanying drawings. It should be understood that the present invention is not limited to the following embodiments, and that the embodiments are provided for illustrative purposes only. The scope of the invention should be defined only by the accompanying claims and equivalents thereof.

In describing embodiments of the present invention and adding reference numerals to elements shown in each of figures of the accompanying drawings, the same elements in different figures of the drawings are denoted by the same reference numerals as possible.

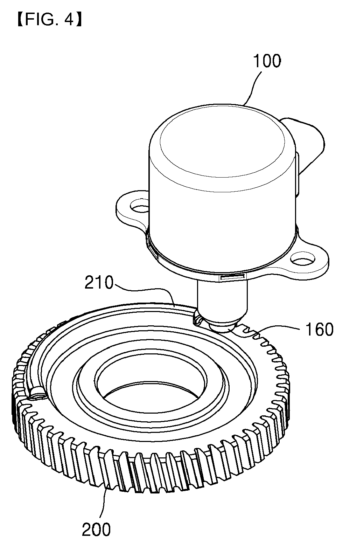

The linear actuator according to an embodiment of the present invention may be a solenoid type actuator that can operate depending on whether electric power is applied. That is, this linear actuator is an apparatus that when electrical power is applied, it allows a rod 160 to be inserted and then allows a worm gear 200 (see, Fig. 4) to rotate whereas when electric power supply is cut off, it allows a rod 160 to be protruded and then prohibits the worm gear 200 from rotating.

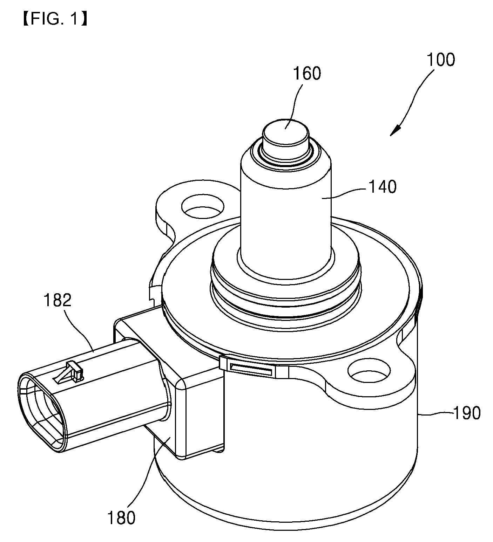

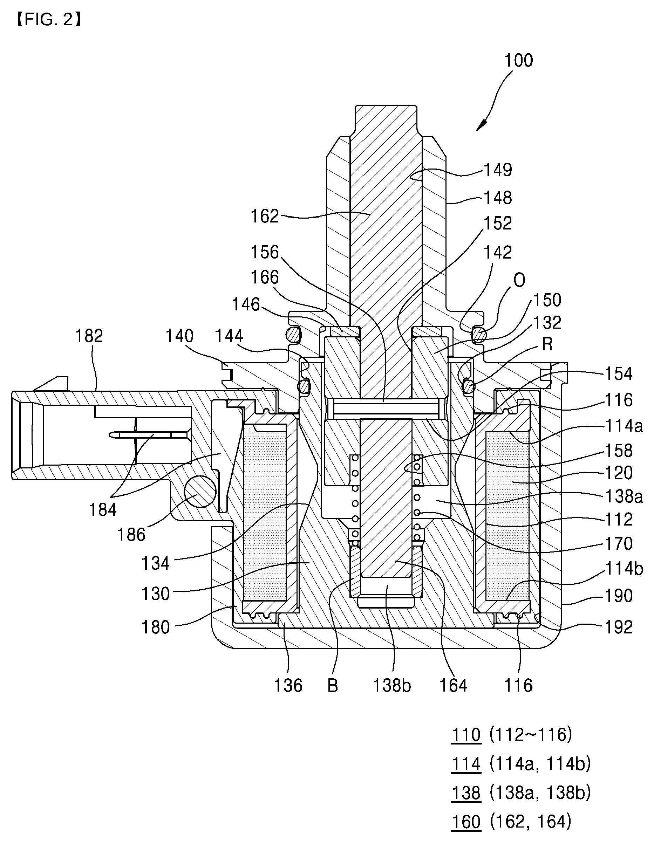

Referring to Figs. 1 and 2, structure of the linear actuator 100 according to this embodiment is now described.

The linear actuator 100 comprises: a bobbin 110, a coil 120 wound around an outer peripheral surface of the bobbin 110, a core 130 combined through the bobbin 110, a yoke 140 combined to an upper portion of the bobbin 110, a plunger 150 installed to be movable in the inside of the core 130, a rod 160 combined to the plunger 150 and protruding to the outside, a spring 170 for elastically supporting the plunger 150 upwardly, a holder 180 enclosing the bobbin 110, and a casing 190.

The bobbin 110 is of a hollow spool shape. That is, the bobbin 110 is of a spool shape consisting of a cylindrical body 112 and flanges 114 provided at each of top and bottom ends of the body 112 respectively. The flanges 114 serve to protect the coil 120 wound around the outer peripheral surface of the body 112 and at the same time guide the coil 120 to be wound with a constant thickness. In this case, fixing protrusions 116 are formed on a top surface of an upper flange 114a and a bottom surface of a lower flange 114b so as to prevent the holder 180 combined to the bobbin 110 from being separated inadvertently.

The coil 120 is a conductive wire that generates magnetic field around the bobbin 110. The coil 120 is wound densely and uniformly around the outer peripheral surface of the bobbin 110 and forms a cylindrical shape of a constant thickness. The magnetic field generated in the coil 120 is induced by the core 130 and the yoke 140, and forces the plunger 150 to move (or descend). At this time, intensity of the magnetic field for moving the plunger 150 is proportional to intensity of electric current flowing along the coil 120 and the number of coils 120 wound around the bobbin 110. Therefore, when a high electric current is applied to the coil 120 and the coil 120 is wound with more number of turns, strong magnetic field is generated and thus, movement of the plunger 150 can be controlled reliably.

The yoke 140 and the core 130 are combined to the top and bottom of the bobbin 110, respectively. The core 130 and the yoke 140 are fixed iron cores that induce magnetic field generated in the coil 120 such that the plunger 150 of a movable iron core is moved by the magnetic field.

The core 130 is of a cylindrical shape passing through the bobbin 110. An upper end outer peripheral surface of the core 130 is formed with a mounting groove 132, an intermediate section outer peripheral surface is formed with a groove 134 for reinforcing magnetic force, and a lower end outer peripheral surface is formed with a flange 136.

The upper end of the core 130 is protruded upwardly through the bobbin 110, and inserted into and fixed to an engagement groove 144 of the yoke 140. The mounting groove 132 is formed on the upper end outer peripheral surface of the core 130, which is inserted into the engagement groove 144, while an O-ring R is installed in the mounting groove 132. The O-ring R seals between the core 130 and the yoke 140 to prevent any foreign matter from entering the interior of the actuator 100 when the plunger 150 and the rod 160 move.

The groove 134 for reinforcing magnetic force is provided to concentrate magnetic field induced by the core 130 to a specific location and secure sufficient magnetic force that can move the plunger 150. As shown in Fig. 2, the groove 134 for reinforcing magnetic force is formed to have a sectional shape tapered along the inside thereof. As such, in case where the groove 134 for reinforcing magnetic force is formed to be tapered, magnetic flux density is concentrated to the tapered groove and thus, movement of the plunger 150 can be controlled reliably.

The flange 136 is to fix the core 130 combined to the bobbin 110 in a specific location. When combining the bobbin 110 and the core 130, the flange 136 contacts with the lower flange 114b of the bobbin 110 so that the core 130 is prevented from moving within the bobbin 110.

On the other hand, there is formed in the inside of the core 130 an operating space 138 for allowing the plunger 150 and the rod 160 to move. The operating space 138 comprises a first operating space 138a formed in the intermediate section of the core 130 and a second operating space 138b formed at a lower portion of the first operating space 138a. The first operating space 138a is formed to have a larger diameter than that of the second operating space 138b and has a configuration extending from the intermediate section to the top end of the core 130 and opening upwardly. The second operating space 138b has a diameter smaller than that of the first operating space 138a and has a configuration connected to the first operating space 138a. A plunger 150 is installed to be movable in the first operating space 138a while a lower end of the rod 160 is installed to be movable in the second operating space 138b. In this case, the second operating space 138b is provided with a dry bearing B for supporting movement of the rod 160 and decreasing friction.

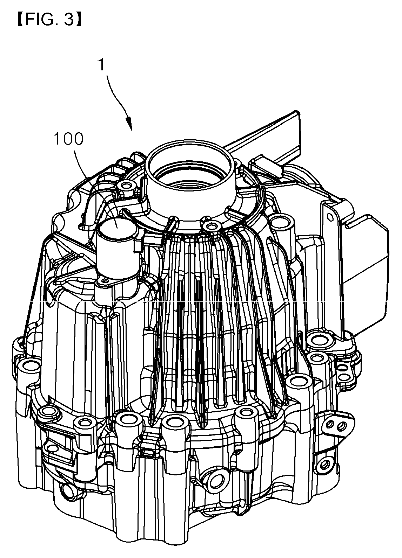

The yoke 140 has a shape of multi-step disks with different diameters. The upper end of the yoke 140 is inserted into the transfer case 1 (see, Fig. 3) when installing the linear actuator 100. The upper end outer peripheral surface of the yoke 140 is formed with a mounting groove 142 while an O-ring O for preventing leakage of oil is installed in the mounting groove 142. The intermediate section of the yoke 140 is formed to have a larger diameter than that of the upper and lower ends thereof and fixed by the casing 190. The lower end of the yoke 140 is inserted into the holder 180 while there is formed in the inside of the lower end of the yoke an engagement groove 144 in which the upper end of the core 130 is inserted. In addition, there is formed at the upper end of the engagement groove 144 an operating groove 146 which is connected to the operating space 138.

On the other hand, a guide 148 is protruded from a top surface of the yoke 140 while there is formed in the inside of the guide 148 a guide hole 149 for guiding movement of the rod 160. Although not shown in the drawings, coating layer for decreasing frictional force against the rod 160 is formed on an inner wall of the guide hole 149. As an example, the coating layer has a multi-layered structure consisting of a first coating layer and a second coating layer, wherein materials for the first coating layer may include nickel (Ni) or chromium (Cr) while materials for the second coating layer may include tungsten disulfide (WS2) or boron (B).

The plunger 150 is a movable iron core which reciprocates by means of magnetic field generated in the coil 120 and induced by the core 130 and the yoke 140. The plunger 150 has a cylindrical shape with a predetermined length. The plunger 150 is formed with a first through hole 152 vertically penetrating the center thereof and a second through hole 154 horizontally penetrating the center thereof. The first through hole 152 is a portion to which the rod 160 is combined, while the second through hole 154 is a portion to which a fixing pin 156 for fixing the rod 160 combined to the plunger 150 is combined. Further, there is formed at a bottom surface of the plunger 150 an insertion groove 158 in which an upper end of the spring 170 is inserted.

The rod 160 includes a large diameter portion 162 passing through the yoke 140 and a small diameter portion 164 passing through the plunger 150. The large diameter portion 162 moves along the guide hole 149 and protrudes to the outside of the yoke 140, or is inserted into the inside of the yoke 140. The small diameter portion 164 is inserted into the first through hole 152 and fixed by the fixing pin 156. In this case, the lower end of the small diameter portion 164 extends to the second operating space 138b and is supported by the dry bearing B.

On the other hand, a shim plate 166 is interposed between the large diameter portion 162 of the rod 160 and the plunger 150, wherein the shim plate 166 is made of non-magnetic material to allow the plunger 150 and the rod 160 to move smoothly.

The spring 170 is a coil spring that is positioned below the plunger 150 to elastically support the plunger 150 upwardly. The plunger 150 descends by means of magnetic field when electric power is applied, but ascends by means of resiliency of the spring 170 when electric power supply is cut off.

The holder 180 is formed to enclose the bobbin 110 and a connector 182 is formed at one side of the holder. A terminal 184 electrically connected to the coil 120 is provided in the inside of the holder 180 while one end of the terminal 184 is exposed to the outside through the connector 182. Another end of the terminal 184 located in the inside of the holder 180 is provided with a diode 186. The diode 186 is connected electrically to the terminal 184, and prevents generation of counter electromotive force when electric power supply is cut off.

The casing 190 has a shape that a top portion is open and a bottom portion is closed. A storage space 192 is formed in the inside of the casing 190, and components 110 to 180 including the bobbin 110 are installed in the storage space 192. At this time, caulking the upper end of the casing 190 to enclose the intermediate section of the yoke 140 is performed. In such case of caulking the upper end of the casing 190, the yoke 140 is pressed toward the bobbin 110 and thereby components 110 to 180 installed in the inside of the casing 190 are compacted. Therefore, it is possible to prevent the components 110 to 180 installed in the inside of the casing 190 from moving, and also possible to prevent any foreign matter from flowing into the upper portion of the casing 190.

As shown in Fig. 3, the linear actuator 100 according to this embodiment is installed in the transfer case 1, and switches between 4H/4L modes by allowing or restricting rotation of the worm gear 200 (see, Fig. 4).

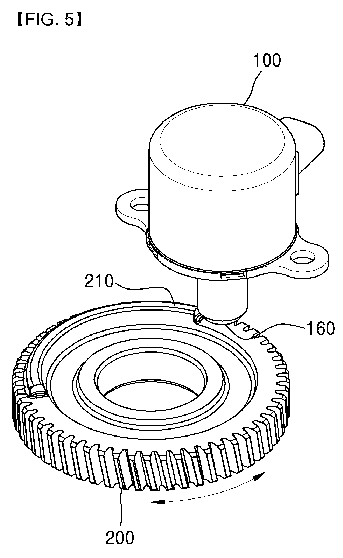

Figs. 4 and 5 illustrate diagrams showing operating state of the linear actuator 100 according to this embodiment, wherein Fig. 4 shows a state that electric power is not applied while Fig. 5 shows a state that electric power is applied.

As shown in Figs. 2 and 4, under the state that electric power is not applied to the linear actuator 100, the plunger 150 moves (descends) by means of resiliency of the spring 170 and thus, the lower end of the rod 160 is protruded to the outside of the yoke 140. At this time, the lower end of the rod 160, which is protruded to the outside of the yoke 140, is positioned on a rotation track of a catch ledge 210 protruding from the top surface of the worm gear 200 to limit rotation of the worm gear 200.

On the other hand, when electric power is applied to the linear actuator 100, magnetic field generated in the coil 120 is induced by the core 130 and the yoke 140 and thereby the plunger 150 is forced to ascend. Therefore, the rod 160 combined to plunger 150 ascends together and is inserted in the inside of the yoke 140, and allows rotation of the worm gear 200 (see, Figs. 2 and 5).

Although the present invention is described in the foregoing based on preferred embodiments of the present invention, it should be understood that the detailed description are given only by way of exemplarily describing and illustrating the spirit of the present invention and it will be understood by those skilled in the art that various changes or modifications can be made to the present invention without departing from the spirit and scope of the invention as defined by the appended claims. Therefore, it is intended that the scope of the present invention should be construed based on the appended claims rather than specific embodiments and that all of technical ideas within equivalents of the appended claims should also be construed as falling within the scope of the present invention.

### List of reference numerals set forth in the drawings

1: transfer case
100: linear actuator
110: bobbin
120: coil
130: core
140: yoke
150: plunger
160: rod
170: spring
180: holder
190: casing
200: worm gear

## Claims

1. Linear actuator comprising:
a spool-shaped bobbin;
a coil wound around an outer peripheral surface of the bobbin;
a core combined through the bobbin and having an operating space formed therein;
a yoke combined to an upper portion of the bobbin and having a guide hole formed therein;
a plunger installed to be movable in the operating space;
a rod combined through the plunger and protruded to the outside through the guide hole;
a spring installed between the core and the plunger to elastically support the plunger upwardly;
a holder provided around the bobbin and having a connector provided at one side thereof; and
a casing combined to enclose the holder.

2. The linear actuator according to claim 1, wherein a groove for reinforcing magnetic force is formed on an intermediate outer peripheral surface of the core.

3. The linear actuator according to claim 2, wherein the operating space comprises a first operating space in which the plunger is installed to be movable and a second operating space in which the rod is installed to be movable.

4. The linear actuator according to claim 3, wherein the second operating space is provided with a dry bearing for supporting movement of the rod and decreasing friction and wherein said spring is disposed between the dry bearing and the plunger.

5. The linear actuator according to claim 1, wherein the rod comprises a small diameter portion passing through the plunger and a large diameter portion formed in the upper portion of the small diameter portion and wherein a non-magnetic shim plate is interposed between the large diameter portion and the plunger.

6. The linear actuator according to claim 5, wherein the plunger and the rod are combined by means of a fixing pin passing through a lateral side of the plunger.

7. The linear actuator according to claim 1, wherein a guide is protruded from a top surface of the yoke and the guide hole is formed to penetrate the guide up and down.

8. The linear actuator according to claim 7, wherein the inner wall of the guide hole is formed with coating layer.

9. The linear actuator according to claim 7, wherein an engagement groove in which the core is inserted is formed on a bottom surface of the yoke and an O-ring is interposed between the yoke and the core.

10. The linear actuator according to claim 1, further comprising a terminal installed in the inside of the holder and protruding to the outside through the connector and connecting electrically to the coil; and a diode provided in the inside of the holder and connected electrically to the terminal.
